# EUROPÄISCHE PATENTSCHRIFT

(11) **EP 2 082 862 B1**
(45) Veröffentlichungstag und Bekanntmachung des Hinweises auf die Patenterteilung: **20.06.2012**
(21) Anmeldenummer: 08001105.9
(22) Anmeldetag: 22.01.2008
(51) Int. Cl.: B29C 47/08, B30B 11/24

(54) **Extruder**
Extruder
Extrudeuse

(43) Veröffentlichungstag der Anmeldung: 29.07.2009
(73) Patentinhaber: Coperion GmbH, 70469 Stuttgart (DE)
(72) Erfinder: Munz, Rainer, Dipl.-Ing., 71540 Murrhardt (DE)
(74) Vertreter: Rau, Manfred

(56) Entgegenhaltungen:
- EP-A- 1 180 423
- DE-A1- 1 454 774
- DE-A1- 3 002 258
- DE-A1- 3 124 224
- US-A- 3 752 489
- UNKNOWN: "Sintered Bronze Bearings"[Online] 8. Juni 2007 (2007-06-08), XP002487857 Gefunden im Internet: URL:http://web.archive.org/web/20070608120 923/http://www.ahrinternational.com/sinter ed_bronze_bearings.htm> [gefunden am 2008-07-11]
- HAAS WERNER: "Grundlehrgang Dichtungstechnik"[Online] 9. Dezember 2006 (2006-12-09), XP002487858 Uni Stuttgart Gefunden im Internet: URL:http://web.archive.org/web/20061209044 208/http://www.ima.uni-stuttgart.de/dichtu ngstechnik/skript_dichtungstechnik.pdf> [gefunden am 2008-07-11]

## Beschreibung

Die Erfindung betrifft einen Extruder.

In der Praxis ist es allgemein üblich, die die Schneckenelemente und gegebenenfalls Knet- und Misch-Elemente tragende Welle durch die stromaufwärts gelegene Stirnwand des Gehäuses des Extruders mittels einer Stopfbuchspackung abzudichten, die gegen ein Widerlager anliegt, das der mindestens einen Bohrung im Gehäuse des Extruders zugewandt ist. Die axiale Zusammendrückung und damit radiale Verspannung der Stopfbuchs-Packung gegen den entsprechenden zylindrischen Abschnitt der Welle einerseits und der Wand der Ausnehmung in der Stirnwand andererseits erfolgt mittels einer diesen Abschnitt der Welle umgebenden Hülse aus Stahl, die mit radialem Abstand zu dem Abschnitt der Welle angeordnet ist. Das Verspannen dieser Hülse gegen die Stopfbuchs-Packung erfolgt mittels einer Spann-Vorrichtung, die einen vor der Stirnwand angeordneten Druck-Ring aufweist, der mittels Schrauben an der Stirnwand befestigt ist und gegen diese verspannt wird. Der Nachteil dieser Ausgestaltung liegt darin, dass durch das Radialspiel der Schnecke gegenüber der Wand der Bohrung und durch späteren Verschleiß die Schnecke während des Betriebes radial ausgelenkt wird, was dazu führt, dass die Stopfbuchs-Packung undicht wird. Sie muss also relativ oft nachgespannt werden. Dies führt zu unerwünschten Betriebs-Stillständen.

Aus der DE 1 454 774 A1 ist eine Vorrichtung zum kontinuierlichen Mischen und Schneiden von Material bekannt. Diese Vorrichtung weist ein Gehäuse auf, in der eine Spindel angeordnet ist, die eine Welle mit einer Vielzahl von im Abstand voneinander angeordneten Fortsätzen und mit Zwischenräumen zwischen den Fortsätzen aufweist. Das Gehäuse ist mit mehreren Reihen von Zähnen versehen, die von der Innenfläche nach innen vorstehen. Die Spindel kann relativ zum Gehäuse sowohl verdreht als auch hin und her bewegt werden, so dass die von der Innenfläche des Gehäuses abstehenden Zähne zwischen den Fortsätzen damit durch die Zwischenräume zwischen den Gewindeabschnitten auf der Spindel hindurchbewegt werden können.

Für eine Abdichtung der Spindel am Austritt aus dem Gehäuse ist auf einem im Durchmesser vergrößerten Abschnitt der Welle eine zylindrische Hülse mittels Schrauben axial fest und drehfest befestigt, die aus sich nur wenig abnützendem Material, wie z. B. chromplattiertem, nicht rostendem Stahl besteht. Zwischen dieser Hülse und der Innenwand des Gehäuses sind eine Reihe von Dichtungsringen angeordnet, die axial gegen einen Haltering anliegen, der im Gehäuse axial festgelegt ist. In Längsrichtung hintereinander sind zwischen derartigen aus Polytetrafluorethylen bestehenden Dichtungsringen drehbare Ringe aus nicht rostendem Stahl mit Schmierbohrungen angeordnet, durch die Silikonfett zugeführt werden kann. Die Dichtungsringe werden mittels eines Druckrings aus Bronze in Längsrichtung des Gehäuses zusammengedrückt, um eine genügend dichte Abdichtung zu erreichen. Der Druck wird durch Schrauben, die am Gehäuse befestigt sind, auf die Dichtungsringe ausgeübt.

Der Erfindung liegt daher die Aufgabe zugrunde, einen Extruder so auszugestalten, dass das Auftreten von Undichtigkeiten im Bereich der Stopfbuchs-Packung zumindest weitgehend reduziert wird.

Diese Aufgabe wird durch die Merkmale des Anspruches 1 gelöst. Der Kern der Erfindung liegt darin, dass die die Schneckenelemente und gegebenenfalls Knet- und Misch-Elemente tragende Welle, und damit die Schnecke insgesamt, an der - bezogen auf die Förderrichtung - stromaufwärtigen Stirnwand fliegend mittels eines Gleitlagers gelagert wird und dass dieses Gleitlager gleichzeitig zum Verspannen der Stopfbuchs-Packung eingesetzt wird. Hierdurch bedingt werden verschleiß- und betriebsbedingte Auslenkungen der Welle im Bereich des auch die Stopfbuchs-Packung tragenden Lager-Abschnitts eliminiert mit der Konsequenz, dass ein Nachspannen der Stopfbuchs-Packung nur in sehr viel größeren Zeitabständen notwendig ist, als dies bisher der Fall ist. Ein zusätzliches Zwischenelement, das zum Verspannen der Stopfbuchs-Packung eingesetzt wird, ist nicht notwendig, da diese Funktion ebenfalls vom Gleitlager übernommen wird. Das Gleitlager aus Sintermetall ist wartungsfrei. Durch die Stütz-Hülse aus einem druckfesten Werkstoff wird die Druckfestigkeit des Gleitlagers erhöht.

Insbesondere durch die Weiterbildung nach Anspruch 2 wird erreicht, dass eine gute Kühlung des Gleitlagers selber und mittelbar damit auch der Stopfbuchs-Packung gegen die Atmosphäre stattfindet.

Weitere Vorteile, Merkmale und Einzelheiten der Erfindung ergeben sich aus der Beschreibung eines Ausführungsbeispiels anhand der Zeichnung. Es zeigt
- Fig. 1: einen Extruder in schematischer Darstellung im Längsschnitt,
- Fig. 2: eine Stirnansicht des Extruders gemäß der Schnittlinie II-II in Fig. 1, und

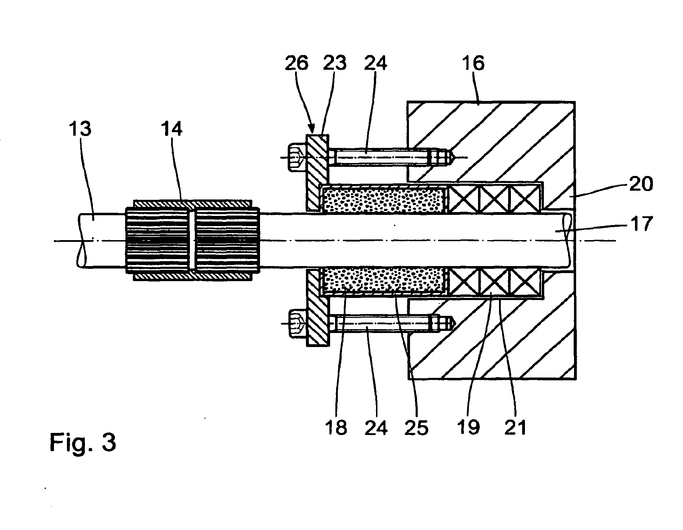

- Fig. 3: eine vergrößerte Teil-Darstellung der Lagerung der Welle in der Stirnwand des Extruders.

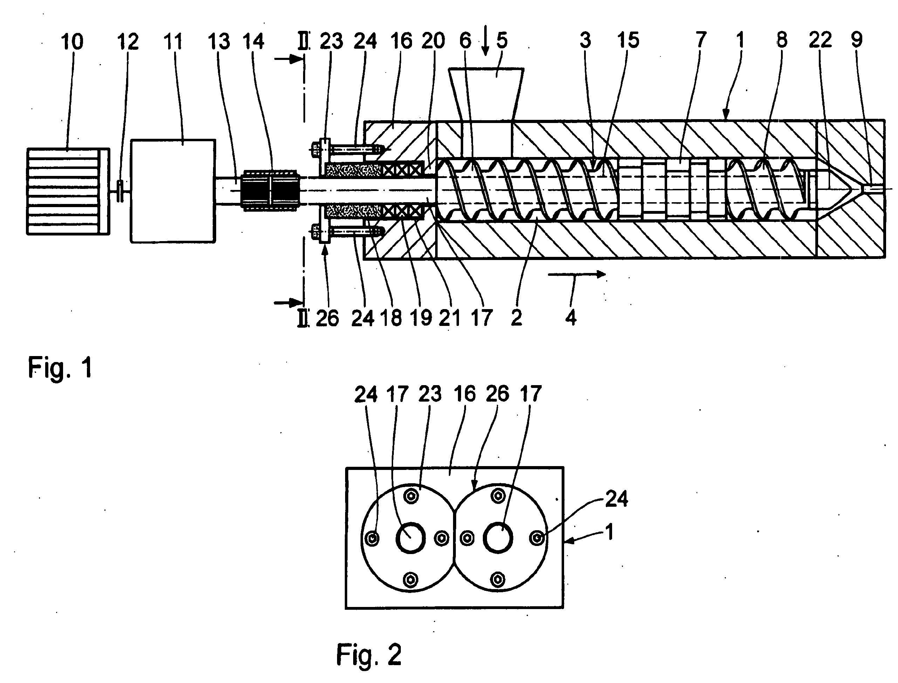

Wie Fig. 1 erkennen lässt, weist ein zweiwelliger Extruder in der üblichen Weise ein Gehäuse 1 auf, in dem in 8-förmig ineinandergreifenden Bohrungen 2 jeweils eine Schnecke 3 angeordnet ist. Am - bezogen auf eine Förderrichtung 4 - stromaufwärtigen Ende ist ein Zuführ-Trichter 5 angeordnet. Die Schnecke 3 weist - in Förderrichtung 4 - Schnecken-Elemente 6 einer Einzugs-Zone und einer Aufschmelz-Zone, Knet-Elemente 7 einer Misch- und Homogenisierzone und weitere Schnecken-Elemente 8 einer Förder- und Austrags-Zone auf. Am Ende schließen sich Austrags-Elemente 9 des Gehäuses 1 an. Die Schnecke 3 ist hier nicht gelagert.

Die Schnecken 3 werden von einem gemeinsamen Antriebs-Motor 10 über ein Verteiler-Getriebe 11 angetrieben, wobei zwischen dem Antriebs-Motor 10 und dem Verteiler-Getriebe 11 eine Kupplung 12 vorgesehen ist. Der Antrieb der beiden Schnecken 3 über die Abtriebs-Wellen 13 des Getriebes 11 erfolgt über Kupplungs-Hülsen 14 auf die Verzahnungs-Wellen 15 der Schnecken 3.

Am Durchtritt der Wellen 15 durch die dem Getriebe 11 zugewandte Stirnwand 16 des Gehäuses 1 sind die Wellen 15 mittels zylindrischer Lager-Abschnitte 17 in jeweils einem Gleitlager 18 fliegend gelagert. Dieses Gleitlager 18 besteht aus einer ringzylindrischen Hülse aus Sintermetall, insbesondere aus Sinterbronze, das wartungsfrei ist. Es stützt sich in Richtung der Bohrungen 2 gegen eine Stopfbuchs-Packung 19 als Dichtung ab, die wiederum gegen einen Anschlag 20 abgestützt ist, der an der Stirnwand 16 als Abgrenzung zur Bohrung 2 hin ausgebildet ist. Die Stopfbuchs-Packung 19 befindet sich also in einer entsprechenden Ausnehmung 21 der Stirnwand 16. Das Gleitlager 18 ist zum Teil radial in der Ausnehmung 21 abgestützt und befindet sich - wie die Zeichnung erkennen lässt - zu einem wesentlichen Teil außerhalb des Gehäuses 1 samt Stirnwand 16, liegt also frei. Andererseits ist es in der Ausnehmung 21 radial soweit abgestützt, dass es seiner Lagerungs- und radialen Führungsfunktion für die Welle 15 der Schnecke 3 gerecht wird. Die axiale Zusammendrückung der jeweiligen Stopfbuchs-Packung 19 in Richtung der Achse 22 der jeweiligen Welle 45 erfolgt durch einen Druck-Ring 23, der mittels Schrauben 24 gegen die Stirnwand 16 verspannt wird.

Damit das Gleitlager 18 aus Sinterbronze eine ausreichende DruckFestigkeit zur axialen Verspannung der Stopfbuchs-Packung 19 aufweist, ist es mit einer Stütz-Hülse 25 aus einem entsprechend festen Material, beispielsweise Stahl, auf seiner Außenseite - selbstverständlich mit Ausnahme der an der Welle 15 anliegenden Lagerfläche - umgeben, die die DruckKräfte von dem Druck-Ring 23 auf die Stopfbuchs-Packung 19 überträgt. Wegen der größtenteils freien Anordnung des Gleitlagers 18 tritt eine gute Wärmeabfuhr nach außen auf.

Der Druck-Ring 23 mit den Schrauben 24 und dem Gleitlager 18 mit Stütz-Hülse 25 bildet also eine Spann-Vorrichtung 26.

Dadurch, dass die Schnecken 3 mit ihren Schnecken-Wellen 15 mittels der Gleitlager 18 in den Lager-Ausnehmungen 21 der Stirnwand 16 gelagert sind, treten keine radialen Auslenkungen der Lager-Abschnitte 17 in diesem Bereich auf, so dass die Dichtigkeit der Stopfbuchs-Packungen 16 gegenüber den Lager-Abschnitten 17 erhalten bleibt. Es tritt also kein im Extruder aufzubereitendes, durch den Trichter 5 zugeführtes Pulver aus den Bohrungen 2 zwischen die Lager-Abschnitte 17 und die Stopfbuchs-Packung 19 bzw. die Stopfbuchs-Packung 19 und die Lager-Ausnehmungen 21 der Stirnwand 16.

Eine erneute Montage der Schnecken 3 nach dem Ziehen derselben - aus den Bohrungen 2 in Förderrichtung 4 - ist in einfacher Weise möglich. Die Stopfbuchs-Packung 19 befindet sich in der Ausnehmung 21. Die Welle wird mit ihrem Lager-Abschnitt 17 entgegen der Förderrichtung 4 durch die Stopfbuchs-Packung 19 hindurchgeschoben und gereinigt. Anschließend wird von außen das Gleitlager 18 auf den jeweiligen Lager-Abschnitt 17 aufgeschoben. Das Verspannen erfolgt mittels der Spann-Vorrichtung 26. Danach wird die Verbindung mittels der Kupplungs-Hülse 14 zur Abtriebs-Welle 13 des Getriebes 11 wieder hergestellt.

## Patentansprüche

1. Extruder
- mit einem Gehäuse (1),
- mit mindestens einer Bohrung (2) im Gehäuse (1), die eine Achse (22) aufweist,
- mit einer die mindestens eine Bohrung (2) abschließenden Stirnwand (16) des Gehäuses (1),
- mit einer zur Achse (22) konzentrisch ausgebildeten Ausnehmung (21) in der Stirnwand (16),
- mit einer in der Bohrung (2) angeordneten Schnecke (3), die einen die Ausnehmung (21) nach außen durchsetzenden zylindrischen Lager-Abschnitt (17) aufweist,
- mit einer Stopfbuchs-Packung (19), die zur Bohrung (2) hin gegen ein Widerlager (20) anliegt und gegen die Ausnehmung (21) und den Lager-Abschnitt (17) abdichtet,
- mit einem auf dem Lager-Abschnitt (17) angeordneten und sich gegen die Ausnehmung (21) radial abstützenden, die Schnecke (3) fliegend lagernden Gleitlager (18), das aus Sinterbronze besteht und auf seiner Außenseite und seinen Stirnseiten mit einer Stütz-Hülse (25) aus einem druckfesten Werkstoff gebildet ist und
- mit einer an der Stirnwand (16) angreifenden, das Gleitlager (18) in Richtung der Achse (22) gegen die Stopfbuchs-Packung (19) unter radialer Verspannung derselben drückenden Spann-Vorrichtung (26).

2. Extruder nach Anspruch 1, wobei das Gleitlager (18) teilweise außerhalb der Stirnwand (16) gegenüber der Atmosphäre frei liegt.

3. Extruder nach Anspruch 1 oder 2, wobei die Spann-Vorrichtung (26) durch einen Druck-Ring (23) gebildet ist, der mittels Schrauben (24) gegen die Stirnwand (16) in Richtung der Achse (22) zur Bohrung (2) hin verspannt ist.

## Claims

1. Extruder comprising
- a housing (1);
- at least one bore (2) in the housing (1), the bore (2) comprising an axis (22);
- a front wall (16) of the housing (1), the front wall (16) closing the at least one bore (2);
- a recess (21) in the front wall (16), the recess (21) being formed concentrically with the axis (22);
- a worm (3) which is arranged in the bore (2) and comprises a cylindrical bearing portion (17) which passes through the recess (21) to the outside;
- a packing gland (19) which abuts against a counter bearing (20) in the direction of the bore (2) and seals against the recess (21) and the bearing portion (17);
- a slide bearing (18) which is arranged on the bearing portion (17) and is radially supported against the recess (21) for supporting the worm (3) in a cantilevered manner, and which consists of sintered bronze and is formed on the outside and the front sides of the slide bearing (18), the support sleeve (25) consisting of a compression-resistant material; and
- a clamping device (26) which engages with the front wall (16) and presses the slide bearing (18) against the packing gland (19) in the direction of the axis (22) in such a way that the packing gland (19) is radially deformed in a sealing manner.

2. Extruder according to claim 1, wherein a part of the slide bearing (18) is arranged outside the front wall (16) and is free with respect to the atmosphere.

3. Extruder according to claim 1 or 2, wherein the clamping device (26) consists of a pressure ring (23) which is pressed against the front wall (16) in the direction of the axis (22) towards the bore (2) by means of screws (24).

## Revendications

1. Extrudeuse
- comprenant un carter (1),
- comprenant au moins un alésage (2) dans le carter (1) qui présente un axe (22),
- comprenant une paroi frontale (16) du carter (1) parachevant au moins un alésage (2),
- comprenant une cavité (21) dans la paroi frontale (16) formée de manière concentrique à l'axe (22),
- comprenant une vis sans fin (3) disposée dans l'alésage (2), vis qui présente un tronçon de support (17) cylindrique traversant la cavité (21) vers l'extérieur,
- comprenant un bourrage étanche (19) qui s'appuie contre une butée (20) jusqu'au niveau de l'alésage (2) et assure l'étanchéité vis-à-vis de la cavité (21) et du tronçon de support (17),
- comprenant un palier lisse (18) mobile pouvant être localisé sur la vis (3) disposé sur un tronçon de support (17) et qui appuie radialement contre la cavité (21), tronçon qui est constitué de bronze fritté et est formé avec une enveloppe support (25) dans un matériau résistant à la pression sur sa face externe et sur ses faces frontales et
- comprenant un dispositif de tension (26) s'accrochant sur la face frontale (16), pressant le palier lisse (18) en direction de l'axe (22) contre le bourrage étanche (19) en maintenant une tension radiale sur ceux-ci.

2. Extrudeuse selon la revendication 1, le palier lisse (18) étant disposé en partie libre à l'extérieur de la paroi frontale (16) par rapport à l'atmosphère.

3. Extrudeuse selon les revendications 1 ou 2, le dispositif de tension (26) étant formé par un anneau de pression (23) qui est étiré vers l'alésage (2), contre la paroi frontale (16) en direction de l'axe (22), au moyen de vis (24).
